(19) **Europäisches Patentamt** / **European Patent Office** / **Office européen des brevets**

(11) **EP 3 557 873 B1**

(12) **EUROPEAN PATENT SPECIFICATION**

(45) Date of publication and mention of the grant of the patent:
**16.02.2022   Bulletin 2022/07**

(21) Application number: **17880544.6**

(22) Date of filing: **08.12.2017**

(51) International Patent Classification (IPC):
*H04N 19/13* (2014.01)     *H04N 19/157* (2014.01)
*H04N 19/176* (2014.01)    *H04N 19/91* (2014.01)
*H04N 19/46* (2014.01)

(52) Cooperative Patent Classification (CPC):
**H04N 19/13; H04N 19/157; H04N 19/176; H04N 19/46; H04N 19/91**

(86) International application number:
**PCT/JP2017/044240**

(87) International publication number:
**WO 2018/110462 (21.06.2018 Gazette 2018/25)**

(54) **IMAGE DECODING DEVICE AND IMAGE ENCODING DEVICE**

BILDDEKODIERUNGSVORRICHTUNG UND BILDKODIERUNGSVORRICHTUNG

DISPOSITIF DE DECODAGE D'IMAGE ET DISPOSITIF DE CODAGE D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2016   JP 2016244900**
**16.03.2017   JP 2017051342**

(43) Date of publication of application:
**23.10.2019   Bulletin 2019/43**

(73) Proprietors:
• **SHARP Kabushiki Kaisha**
**Sakai-City**
**Osaka 590-8522 (JP)**
• **FG Innovation Company Limited**
**Hong Kong (CN)**

(72) Inventors:
• **IKAI, Tomohiro**
**Osaka 590-8522 (JP)**
• **YASUGI, Yukinobu**
**Osaka 590-8522 (JP)**
• **AONO, Tomoko**
**Osaka 590-8522 (JP)**

(74) Representative: **Müller-Boré & Partner**
**Patentanwälte PartG mbB**
**Friedenheimer Brücke 21**
**80639 München (DE)**

(56) References cited:
**EP-A1- 2 763 414        WO-A1-2013/047811**
**WO-A1-2017/088810    US-A1- 2016 057 433**

• **RAPPORTEUR Q6/16: "Report of the Q6/16 Rapp. Group meeting and 4th meeting of the Joint Collaborative Team on Video Coding (JCT-VC, Daegu, KR, 20-28 January 2011)", ITU-T SG16 MEETING; 14-3-2011 - 25-3-2011; GENEVA,, no. T09-SG16-110314-TD-WP3-0169, 15 November 2010 (2010-11-15), XP030100573,**
• **CHEN, JIANLE ET AL.: 'Algorithm Description of Joint Exploration Test Model 2' JOINT VIDEO EXPLORATION TEAM (JVET) OF ITU-T SG 16 WP 3 AND ISO/IEC JTC 1/SC 29/ WO 11 , JVET-B1001_V3 20 February 2016, pages 1 - 3, XP055436454**
• **WANG, ZHAO ET AL.: 'Local-Constrained Quadtree Plus Binary Tree Block Partition Structure for Enhanced Video Coding' VISUAL COMMUNICATIONS AND IMAGE PROCESSING (VCI 2016 27 November 2016, pages 1 - 4, XP055472947**

**Description**

Technical Field

The disclosure relates to an image decoding device and an image coding device.

Background Art

A video encoding device configured to generate coded data by coding a video and a video decoding device configured to generate decoded images by decoding the coded data are used, in order to transmit or record the video efficiently.

As specific video coding schemes, for example, schemes suggested by H.264/AVC and High-Efficiency Video Coding (HEVC), and the like can be cited.

In such a video coding scheme, images (pictures) constituting a video are managed by a hierarchy structure including slices obtained by splitting the images, Coding Tree Units (CTUs) obtained by splitting the slices, coding units (also referred to as Coding Units (CUs) in some cases) obtained by splitting the Coding Tree Units, and prediction units (PUs) and transform units (TUs) as blocks obtained by splitting the coding units, and are coded/decoded for each CU.

In such a video coding scheme, normally, a prediction image is generated based on a local decoded image obtained by coding/decoding an input image, and a prediction residual (also referred to as a "difference image" or "residual image" in some cases) obtained by subtracting the prediction image from the input image (original image) is coded. Generation methods for prediction images include an inter-screen prediction (inter-prediction) and an intra-screen prediction (intra-prediction).

An example of a recent technique of video coding and decoding is described in : "Algorithm Description of Joint Exploration Test Model 5", JVET-E1001-v1, Joint Video Exploration Team (JVET) of ITU-T SG 16 WP 3 and ISO/IEC JTC 1/SC 29/WG 11, 12-20 January 2017.

Furthermore, in recent years, as a splitting scheme for the CTUs constituting the slices, a BT split in which the CTU is split into binary trees is introduced in addition to a QT split in which the CTU is split into quad trees. The BT split includes a horizontal split and a vertical split.

Document Rapporteur Q6/16, "Report of the Q6/16 Rapp. Group meeting and 4th meeting of the Joint Collaborative Team on Video Coding, JCT-VC, Daegu, KR, 20-28 January 2011), ITU-T SG16 Meeding,14 to 25 march 2011, Geneva, TD 169(WP 3/16), in item JCTVC-D254, enhanced Context Modelling for Skip and Split Flag, describes that CABAC is used in the HM HE configurations. It is proposed a new context model for entropy coding of the SplitFlag for CU subdivision and the SkipFlag for CU skipping, by using both the depth and neighboring flags as context.

Summary

Technical Problem

However, as a splitting scheme for the CTUs, since the BT split is introduced in addition to the QT split, split patterns of the CTU into CUs are increased and the amount of coding or decoding processing of the video is increased, so that the coding/decoding becomes complicated. In the QT split and the BT split, a QT split flag needs to be coded or decoded and a BT split flag also needs to be coded or decoded. In addition, there is a problem that code amounts of these split flags are large.

An aspect of the disclosure has been conceived in view of the problems described above, and a main object thereof is to provide a technique capable of reducing the code amounts of split information in an image coding device or an image decoding device.

Solution to Problem

In order to solve the above-described problems, there is provided an image decoding device and an image coding device as defined in the independent claims, respectively.

Advantageous Effects of Invention

According to an aspect of the disclosure, in the image decoding device, the code amounts of split information can be reduced.

Brief Description of Drawings

FIG. 1 is a schematic diagram illustrating a configuration of an image transmission system according to the present embodiment.

FIGS. 2A to 2F are diagrams illustrating a hierarchy structure of data of a coding stream according to the present embodiment.

FIGS. 3A to 3H are diagrams illustrating patterns of PU split modes. FIGS. 3A to 3H indicate partition shapes in cases that the PU split modes are 2Nx2N, 2NxN, 2NxnU, 2NxnD, Nx2N, nLx2N, nRx2N, and NxN, respectively.

FIGS. 4A and 4B are conceptual diagrams illustrating an example of reference pictures and reference picture lists.

FIG. 5 is a block diagram illustrating a configuration of an image coding device according to the present embodiment.

FIG. 6 is a schematic diagram illustrating a configuration of an image decoding device according to the present embodiment.

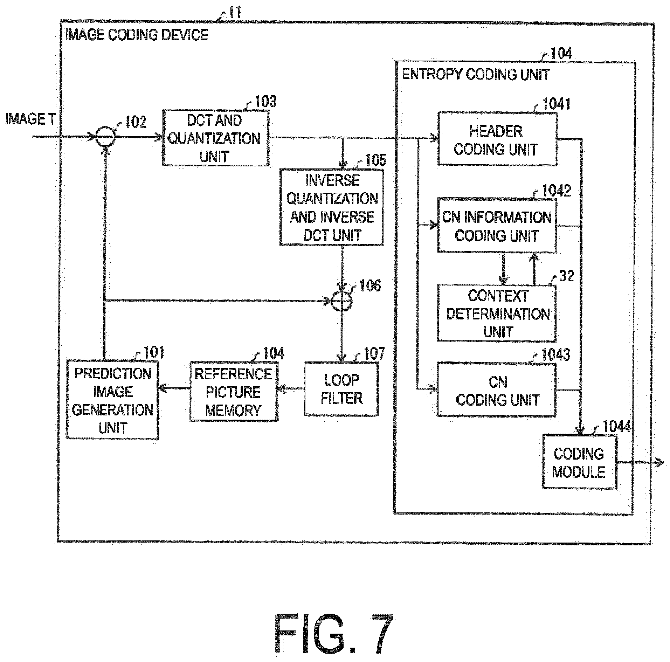

FIG. 7 is a block diagram illustrating a configuration of a main portion of an image coding device according to the present embodiment.

FIGS. 8A and 8B are diagrams illustrating configurations of a transmitting apparatus equipped with an image coding device and a receiving apparatus equipped with an image decoding device according to the present embodiment. FIG. 8A illustrates the transmitting apparatus equipped with the image coding device, and FIG. 8B illustrates the receiving apparatus equipped with the image decoding device.

FIGS. 9A and 9B are diagrams illustrating configurations of a recording apparatus equipped with an image coding device and a regeneration apparatus equipped with an image decoding device according to the present embodiment. FIG. 9A illustrates the recording apparatus equipped with the image coding device, and FIG. 9B illustrates the regeneration apparatus equipped with the image decoding device.

FIG. 10 is a block diagram illustrating a configuration of a main portion of an image decoding device according to the present embodiment.

FIG. 11A is a diagram illustrating a QT split. FIG. 11B is a diagram for explaining a BT split. FIG. 11C is a diagram illustrating a TT split.

FIG. 12 is a flowchart illustrating a context determination method performed by an image decoding device according to an embodiment of the disclosure.

FIG. 13 is a diagram illustrating a context determination method performed by an image decoding device according to an embodiment of the disclosure.

FIG. 14 is a diagram illustrating a specific example of a context determination method performed by an image decoding device according to an embodiment of the disclosure.

Description of Embodiments

First Embodiment

Hereinafter, embodiments of the disclosure are described with reference to the drawings.

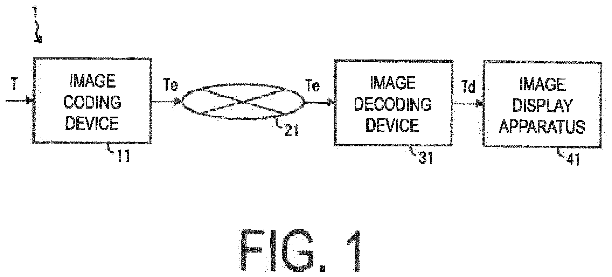

FIG. 1 is a schematic diagram illustrating a configuration of an image transmission system 1 according to the present embodiment.

The image transmission system 1 is a system configured to transmit codes of a coding target image having been coded, decode the transmitted codes, and display an image. The image transmission system 1 is configured to include an image coding device 11, a network 21, an image decoding device 31, and an image display apparatus 41.

An image T indicating an image of a single layer or a plurality of layers is input to the image coding device 11. A layer is a concept used to distinguish a plurality of pictures in a case that there are one or more pictures to configure a certain time. For example, coding an identical picture in the plurality of layers having different image qualities and resolutions is scalable coding, and coding pictures having different viewpoints in the plurality of layers is view scalable coding. In a case of performing a prediction (an inter-layer prediction, an inter-view prediction) between pictures in the plurality of layers, coding efficiency greatly improves. In a case of not performing a prediction (simulcast), coded data can be compiled.

The network 21 transmits a coding stream Te generated by the image coding device 11 to the image decoding device 31. The network 21 is the Internet, a Wide Area Network (WAN), a Local Area Network (LAN), or a combination thereof. The Network 21 is not necessarily a bidirectional communication network, but may be a unidirectional communication network configured to transmit broadcast wave such as digital terrestrial television broadcasting and satellite broadcasting. The network 21 may be substituted with a storage medium having recorded therein the coding stream Te, such as a Digital Versatile Disc (DVD) or Blu-ray Disc (registered trademark) (BD).

The image decoding device 31 decodes each of the coding streams Te transmitted by the network 21, and generates one or a plurality of decoded images Td.

The image display apparatus 41 displays all or part of one or the plurality of decoded images Td generated by the image decoding device 31. For example, the image display apparatus 41 includes a display device such as a liquid crystal display or an organic Electro-luminescence (EL) display. In special scalable coding and SNR scalable coding, in a case that the image decoding device 31 and the image display apparatus 41 have high processing capability, an enhanced layer image having high image quality is displayed, and in a case of having lower processing capability, a base layer image which does not require as high processing capability and display capability as an enhanced layer is displayed.

Operator

Operators used herein will be described below.

>> is a right bit shift, << is a left bit shift, & is a bitwise AND, | is bitwise OR, and |= is a sum operation (OR) with another condition.

x ? y : z is a ternary operator to take y in a case that x is true (other than 0), and take z in a case that x is false (0).

Clip3 (a, b, c) is a function to clip c in a value equal to or greater than a and equal to or less than b, and a function to return a in a case that c is less than a (c < a), return b in a case that c is greater than b (c > b), and return c otherwise (however, a is equal to or less than b (a <= b)).

Structure of Coding Stream Te

Prior to the detailed description of the image coding device 11 and the image decoding device 31 according to the present embodiment, the data structure of the coding stream Te generated by the image coding device 11 and decoded by the image decoding device 31 will be described.

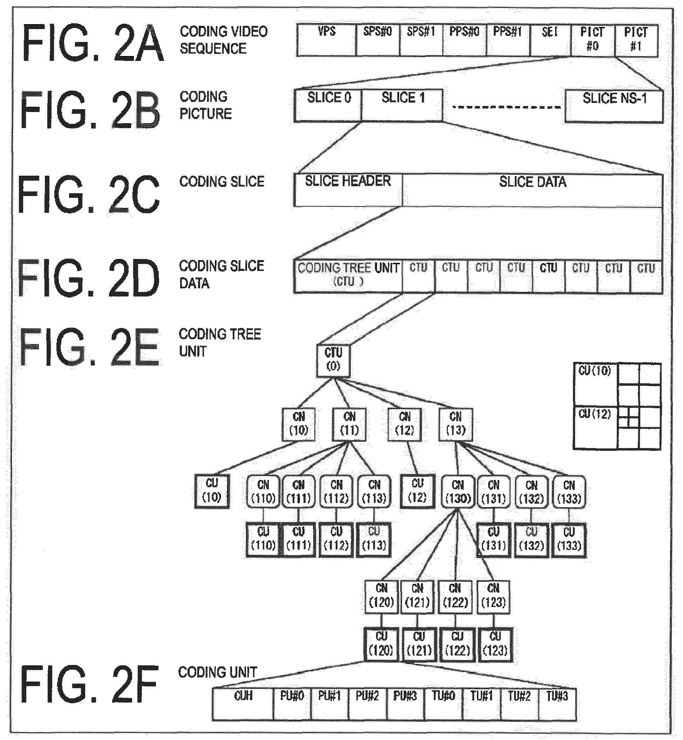

FIGS. 2A to 2F are diagrams illustrating the hierarchy structure of data in the coding stream Te. The coding stream Te includes a sequence and a plurality of pictures constituting the sequence, illustratively. FIGS. 2A to 2F are diagrams indicating a coding video sequence prescribing a sequence SEQ, a coding picture prescribing a picture PICT, a coding slice prescribing a slice S, a coding slice data prescribing slice data, a coding tree unit included in coding slice data, and coding units (CUs) included in a coding tree unit, respectively.

Coding Video Sequence

In the coding video sequence, a set of data referred to by the image decoding device 31 to decode the sequence SEQ of a processing target is prescribed. As illustrated in FIG. 2A, the sequence SEQ includes a Video Parameter Set, a Sequence Parameter Set (SPS), a Picture Parameter Set (PPS), a picture PICT, and Supplemental Enhancement Information (SEI). Here, a value indicated after # indicates a layer ID. In FIGS. 2A to 2F, although an example is illustrated where coding data of # 0 and # 1, in other words, layer 0 and layer 1 exists, types of layers and the number of layers are not limited thereto.

In the Video Parameter Set VPS, in a video constituted by the plurality of layers, a set of coding parameters common to the plurality of videos, and a set of coding parameters associated with the plurality of layers and an individual layer included in the video are prescribed.

In the Sequence Parameter Set SPS, a set of coding parameters referred to by the image decoding device 31 to decode a target sequence is prescribed. For example, width and height of a picture are prescribed. Note that the plurality of SPSs may exist. In that case, any of the plurality of SPSs is selected from the PPS.

In the Picture Parameter Set PPS, a set of coding parameters referred to by the image decoding device 31 to decode each picture in a target sequence is prescribed. For example, a reference value (pic_init_qp_minus26) of a quantization step size used for decoding of a picture and a flag (weighted_pred_flag) indicating an application of a weighted prediction are included. Note that the plurality of PPSs may exist. In that case, any of the plurality of PPSs is selected from each picture in a target sequence.

Coding Picture

In the coding picture, a set of data referred to by the image decoding device 31 to decode the picture PICT of a processing target is prescribed. As illustrated in FIG. 2B, the picture PICT includes slices S0 to SNS-1 (NS is the total number of slices included in the picture PICT).

Hereinafter, in a case that it is not necessary to distinguish the slices S0 to SNS-1 from each other, reference signs may be described with subscripts omitted. The same applies to data included in the coding stream Te described below and described with an added subscript.

Coding Slice

In the coding slice, a set of data referred to by the image decoding device 31 to decode the slice S of a processing target is prescribed. As illustrated in FIG. 2C, the slice S includes a slice header SH and a slice data SDATA.

The slice header SH includes a coding parameter group referred to by the image decoding device 31 to determine a decoding method of a target slice. Slice type specification information (slice_type) to specify a slice type is one example of a coding parameter included in the slice header SH.

Examples of slice types that can be specified by the slice type specification information include: (1) an I slice using only an intra-prediction in coding; (2) a P slice using a unidirectional prediction or an intra-prediction in coding; and (3) a B slice using a unidirectional prediction, a bidirectional prediction, or an intra-prediction in coding.

Note that, the slice header SH may include a reference (pic_parameter_set_id) to the Picture Parameter Set PPS included in the coding video sequence.

Coding Slice Data

In the coding slice data, a set of data referred to by the image decoding device 31 to decode the slice data SDATA of a processing target is prescribed. As illustrated in FIG. 2D, the slice data SDATA includes Coding Tree Units (CTUs). The CTU is a fixed size (for example, 64x64) block constituting a slice, and may be referred to as a Largest Coding Unit (LCU).

Coding Tree Unit

As illustrated in FIG. 2E, a set of data referred to by the image decoding device 31 to decode a coding tree unit of a processing target is prescribed. The coding tree unit is split by a recursive quad tree split (QT split) or binary tree split (BT split). Nodes of a tree structure obtained by the recursive quad tree split or binary tree split are referred to as Coding Nodes (CNs). Intermediate nodes of quad trees and binary trees are a Coding Tree (CT), and a Coding Tree unit itself is also prescribed as a highest level Coding Tree.

The CTU includes a QT split flag (cu_split_flag) indicating whether or not to perform a QT split, and a BT split mode (split_bt_mode) indicating a split method of the BT split. In a case that cu_split_flag is 1, the CTU is split into four coding node CNs. In a case that cu_split_flag is 0, the coding node CN is not split, and has one Coding Unit (CU) as a node. On the other hand, in a case that split_bt_mode is 2, the CN is split into two coding nodes CNs by a horizontal split (a split by a horizontal split line into two or more blocks of upper and lower sides). In a case that split_bt_mode is 1, the CN is split into two coding nodes CNs by a vertical split (a split by a vertical line into two or more blocks of left and right sides in this case). In a case that split_bt_mode is 0, the coding node CN is not split, and has one coding unit CU as a node. Since a certain block is split into two or more blocks arranged in a vertical direction, the horizontal split is also referred to as "to split vertically". Likewise, since a certain block is split into two or more blocks arranged in a horizontal direction, the vertical split is also referred to as "to split horizontally". In summary, the definitions of the terms are as follows.

Horizontal split = to split vertically = to split in an up-down direction
Vertical split = to split horizontally = to split in a left-right direction

The coding unit CU is an end node (leaf node) of the coding nodes, and is not split any more. The coding unit CU is a basic unit of coding processing.

Further, in a case that the size of the coding tree unit CTU is 64x64 pixels, the size of the coding unit can take any of 64x64 pixels, 64x32 pixels, 32x64 pixels, 32x32 pixels, 64×16 pixels, 16x64 pixels, 32x16 pixels, 16x32 pixels, 16x16 pixels, 64x8 pixels, 8x64 pixels, 32x8 pixels, 8x32 pixels, 16x8 pixels, 8x16 pixels, and 8x8 pixels.

Coding Unit

As illustrated in FIG. 2F, a set of data referred to by the image decoding device 31 to decode the coding unit of a processing target is prescribed. Specifically, the coding unit is constituted by a prediction tree, a transform tree, and a CU header CUH. In the CU header, a prediction mode, a split method (PU split mode), and the like are prescribed.

In the prediction tree, prediction information (a reference picture index, a motion vector, and the like) of each prediction unit (PU) where the coding unit is split into one or a plurality of pieces is prescribed. In another expression, the prediction unit is one or the plurality of non-overlapping regions constituting the coding unit. The prediction tree includes one or the plurality of prediction units obtained by the above-mentioned split. Note that, in the following, a unit of prediction where the prediction unit is further split is referred to as a "subblock". The subblock is constituted by a plurality of pixels. In a case that sizes of the prediction unit and the subblock are equal, there is one subblock in the prediction unit. In a case that the prediction unit is larger than a size of the subblock, the prediction unit is split into subblocks. For example, in a case that the prediction unit is 8x8, and the subblock is 4x4, the prediction unit is split into four subblocks formed by two horizontal splits and two vertical splits.

The prediction processing may be performed for each of these prediction units (subblocks).

Generally speaking, there are two types of splits in the prediction tree including a case of an intra-prediction and a case of an inter-prediction. The intra-prediction is a prediction in an identical picture, and the inter-prediction refers to a prediction processing performed between mutually different pictures (for example, between display times, and between layer images).

In a case of an intra-prediction, the split method has 2Nx2N (the same size as the coding unit) and NxN.

In a case of an inter-prediction, the split method includes coding by a PU split mode (part mode) of the coding data, and includes 2Nx2N (the same size as the coding unit), 2NxN, 2NxnU, 2NxnD, Nx2N, nLx2N, nRx2N, NxN, and the like. Note that 2NxN and Nx2N each indicate a symmetrical split of 1:1, while 2NxnU, 2NxnD and nLx2N, nRx2N indicate dissymmetry splits of 1:3 and 3:1. The PUs included in the CU are expressed as PU0, PU1, PU2, and PU3 sequentially.

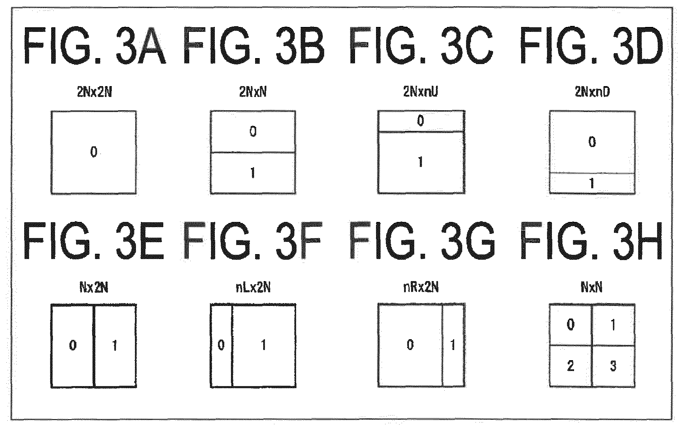

FIGS. 3A to 3H illustrate shapes of partitions in respective PU split modes (positions of boundaries of PU splits) specifically. FIG. 3A indicates a partition of 2Nx2N, and FIGS. 3B, 3C, and 3D indicate partitions (horizontally long partitions) of 2NxN, 2NxnU, and 2NxnD, respectively. FIGS. 3E, 3F, and 3G indicate partitions (vertically long partitions) in cases of Nx2N, nLx2N, and nRx2N, respectively, and FIG. 3H indicates a partition of NxN. Note that horizontally long partitions and vertically long partitions are collectively referred to as rectangular partitions, and 2Nx2N and NxN are collectively referred to as square partitions.

In a Transform Tree (TT), the coding unit is split into one or a plurality of Transform Units (TUs), and a position arid a size of each Transform Unit are prescribed. In another expression, the Transform Unit is one or the plurality of non-overlapping regions constituting the coding unit. The Transform Tree includes one or the plurality of Transform Units obtained by the above-mentioned splits.

The splits in the Transform Tree include splits to allocate a region that is the same in size as the coding unit as a Transform Unit, and splits to obtain a Transform Unit by performing the quad tree split (TU split) on the CU similarly to the above-mentioned splits of CUs. Transform processing is performed for each of the Transform Units.

Prediction Parameter

A prediction image of Prediction Units (PUs) is derived by prediction parameters attached to the PUs. The prediction parameter includes a prediction parameter of an intra-prediction or a prediction parameter of an inter-prediction. The prediction parameter of an inter-prediction (inter-prediction parameters) will be described below. The inter-prediction parameter is constituted by prediction list utilization flags predFlagLO and predFlagLI, reference picture indexes refIdxL0 and refIdxLI, and motion vectors mvL0 and mvLI. The prediction list utilization flags predFlagLO and predFlagL1 are flags to indicate whether or not reference picture lists referred to as L0 list and L1 list respectively are used, and a corresponding reference picture list is used in a case that the value is 1. Note that, in a case that the present specification mentions "a flag indicating whether or not XX", a flag being other than 0 (for example, 1) assumes a case of XX, and a flag being 0 assumes a case of not XX, and 1 is treated as true and 0 is treated as false in a logical negation, a logical product, and the like (hereinafter, the same is applied). However, other values can be used for true values and false values in real apparatuses and methods.

For example, syntax elements to derive inter-prediction parameters included in a coded data include a PU split mode part_mode, a merge flag merge_flag, a merge index merge_idx, an inter-prediction indicator inter_pred_idc, a reference picture index refIdxLX, a prediction vector index mvp_LX_idx, and a difference vector mvdLX.

Reference Picture List

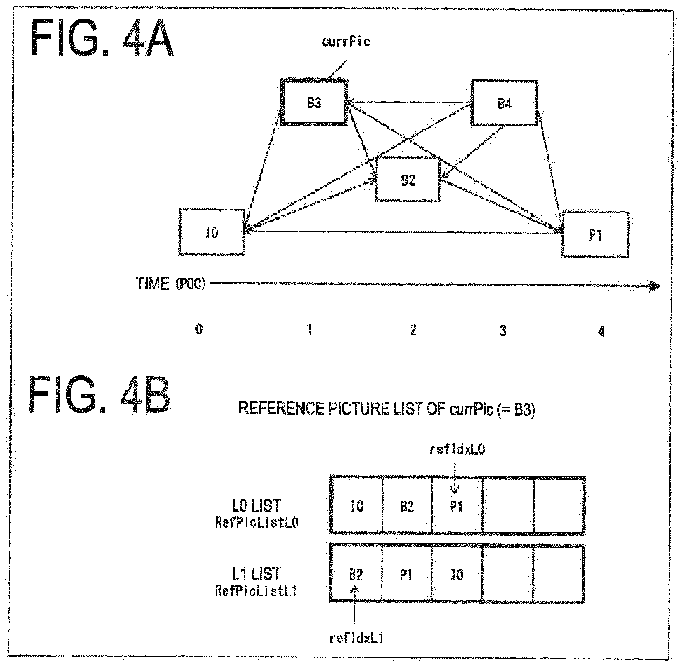

A reference picture list is a list constituted by reference pictures stored in a reference picture memory 306. FIGS. 4A and 4B are conceptual diagrams illustrating an example of reference pictures and reference picture lists. In FIG. 4A, a rectangle indicates a picture, an arrow indicates a reference relationship of a picture, a horizontal axis indicates time, each of I, P, and B in a rectangle indicates an intra-picture, a uni-prediction picture, a bi-prediction picture, and a number in a rectangle indicates a decoding order. As illustrated, the decoding order of the pictures is 10, PI, B2, B3, and B4, and the display order is 10, B3, B2, B4; and P1. FIG. 4B indicates an example of reference picture lists. The reference picture list is a list to represent a candidate of a reference picture, and one picture (slice) may include one or more reference picture lists. In an example of the drawing, a target picture B3 includes two reference picture lists, i.e., an L0 list RefPicList0 and an L1 list RefPicListl. In a case that a target picture is B3, the reference pictures are 10, PI, and B2, and the reference picture includes these pictures as elements. For an individual prediction unit; which picture in a reference picture list RefPicListX is actually referred to is specified with a reference picture index refIdxLX. The diagram indicates an example where the reference pictures P1 and B2 are referred to by refIdxLO and refIdxL1.

Merge Prediction and AMVP Prediction

Decoding (coding) methods of prediction parameters include a merge prediction (merge) mode and an Adaptive Motion Vector Prediction (AMVP) mode, and a merge flag merge_flag is a flag to identify these. The merge prediction mode is a mode to use, without including a prediction list utilization flag predFlagLX (or an inter-prediction indicator inter_pred_idc), a reference picture index refIdxLX, and a motion vector mvLX in coding data, to derive from prediction parameters of neighbor PUs having already been processed, while the AMVP mode is a mode to include an inter-prediction indicator inter_pred_idc, a reference picture index refIdxLX, and a motion vector mvLX in coding data. Note that, the motion vector mvLX is coded as a prediction vector index mvp_LX_idx identifying a prediction vector mvpLX and a difference vector mvdLX.

The inter-prediction indicator inter_pred_idc is a value indicating types and the number of reference pictures, and takes any value of PRED_L0, PRED_L1, and PRED_BI. PRED_L0 and PRED_L1 indicate to use reference pictures managed in the reference picture list of the L0 list and the L1 list respectively, and indicate to use one reference picture (uni-prediction). PRED_BI indicates to use two reference pictures (bi-prediction BiPred), and use reference pictures managed in the L0 list and the L1 list. The prediction vector index mvp_LX_idx is an index indicating a prediction vector, and the reference picture index refIdxLX is an index indicating reference pictures managed in a reference picture list. Note that LX is a description method used in a case of not distinguishing the L0 prediction and the L1 prediction, and distinguishes parameters for the L0 list and parameters for the L1 list by replacing LX with L0 and L1.

The merge index merge_idx is an index to indicate to use either prediction parameter as a prediction parameter of a decoding target PU among prediction parameter candidates (merge candidates) derived from PUs of which the processing is completed.

Motion Vector

The motion vector mvLX indicates a gap quantity between blocks in two different pictures. A prediction vector and a difference vector related to the motion vector mvLX are referred to as a prediction vector mvpLX and a difference vector mvdLX respectively.

Inter-Prediction Indicator inter_pred_idc and Prediction List Utilization Flag predFlagLX

Relationships between an inter-prediction indicator inter_pred_idc and prediction list utilization flags predFlagLO and predFlagL1 are as follows, and those can be converted mutually.
    inter_pred_idc = (predFlagL1 << 1) + predFlagL0
    predFlagL0 = inter_pred_idc & 1
    predFlagL1 = inter_pred_idc >> 1

Note that an inter-prediction parameter may use a prediction list utilization flag or may use an inter-prediction indicator. A determination using a prediction list utilization flag may be replaced with a determination using an inter-prediction indicator. On the contrary, a determination using an inter-prediction indicator may be replaced with a determination using a prediction list utilization flag.

Determination of Bi-Prediction biPred

A flag biPred of whether or not a bi-prediction BiPred can be derived from whether or not two prediction list utilization flags are both 1. For example, the flag can be derived by the following equation.

$$biPred = (predFlagL0 == 1 \ \&\& \ predFlagL1 == 1)$$

The flag biPred can be also derived from whether an inter-prediction indicator is a value indicating to use two prediction lists (reference pictures). For example, the flag can be derived by the following equation.

$$biPred = (inter\_pred\_idc == PRED\_BI) ? 1 : 0$$

The equation can be also expressed with the following equation.

$$biPred = (inter\_pred\_idc == PRED\_BI)$$

Note that, for example, PRED_BI can use the value of 3.

Configuration of Image Decoding Device

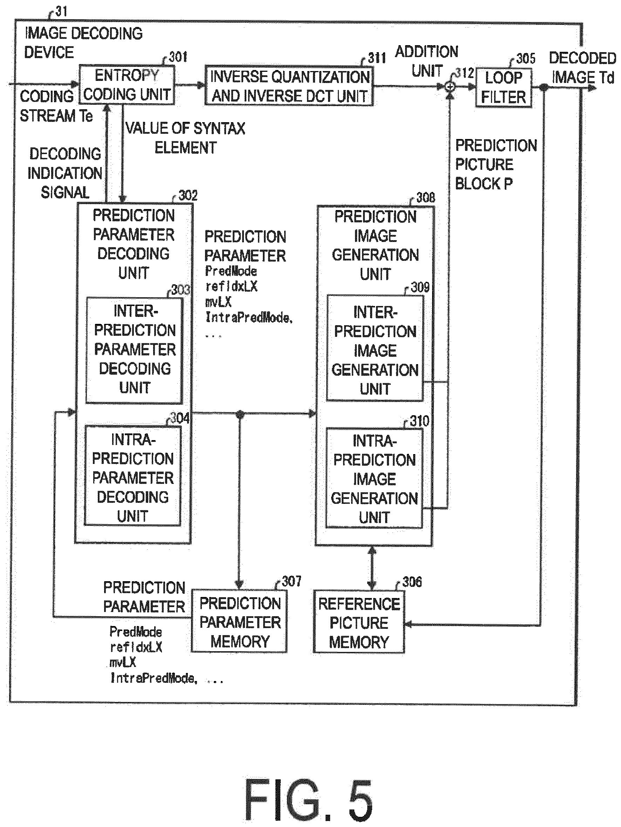

A configuration of the image decoding device 31 according to the present embodiment will now be described. FIG. 5 is a schematic diagram illustrating the configuration of the image decoding device 31 according to the present embodiment. The image decoding device 31 is configured to include an entropy decoding unit 301, a prediction parameter decoding unit (a prediction image decoding device) 302, a loop filter 305, the reference picture memory 306, a prediction parameter memory 307, a prediction image generation unit (prediction image generation device) 308, an inverse quantization and inverse DCT unit 311, and an addition unit 312.

The prediction parameter decoding unit 302 is configured to include an inter-prediction parameter decoding unit 303 and an intra-prediction parameter decoding unit 304. The prediction image generation unit 308 is configured to include an inter-prediction image generation unit 309 and an intra-prediction image generation unit 310.

The entropy decoding unit 301 performs entropy decoding on the coding stream Te input from the outside, and separates and decodes individual codes (syntax elements). The separated codes include prediction information to generate a prediction image, residual information to generate a difference image, and the like.

The entropy decoding unit 301 outputs a part of the separated codes to the prediction parameter decoding unit 302. For example, a part of the separated codes includes a prediction mode predMode, a PU split mode part_mode, a merge flag merge_flag, a merge index merge_idx, an inter-prediction indicator inter_pred_idc, a reference picture index refIdxLX, a prediction vector index mvp_LX_idx, and a difference vector mvdLX. The control on which code to decode is performed based on an indication of the prediction parameter decoding unit 302. The entropy decoding unit 301 outputs quantization coefficients to the inverse quantization and inverse DCT unit 311. These quantization coefficients are coefficients obtained by performing Discrete Cosine Transform (DCT) on a residual signal to achieve quantization in coding processing.

The inter-prediction parameter decoding unit 303 decodes an inter-prediction parameter with reference to a prediction parameter stored in the prediction parameter memory 307 based on a code input from the entropy decoding unit 301.

The inter-prediction parameter decoding unit 303 outputs a decoded inter-prediction parameter to the prediction image generation unit 308, and also stores the decoded inter-prediction parameter in the prediction parameter memory 307. Details of the inter-prediction parameter decoding unit 303 will be described below.

The intra-prediction parameter decoding unit 304 decodes an intra-prediction parameter with reference to a prediction parameter stored in the prediction parameter memory 307 based on a code input from the entropy decoding unit 301. The intra-prediction parameter is a parameter used in the processing to predict a CU in one picture, for example, an intra-prediction mode IntraPredMode. The intra-prediction parameter decoding unit 304 outputs a decoded intra-prediction parameter to the prediction image generation unit 308, and also stores the decoded intra-prediction parameter in the prediction parameter memory 307.

The intra-prediction parameter decoding unit 304 may derive different intra-prediction modes for luminance and chrominance. In this case, the intra-prediction parameter decoding unit 304 decodes a luminance prediction mode IntraPredModeY as a prediction parameter of luminance, and decodes a chrominance prediction mode IntraPredModeC as a prediction parameter of chrominance. The luminance prediction mode IntraPredModeY includes 35 modes, and corresponds to a planar prediction (0), a DC prediction (1), directional predictions (2 to 34). The chrominance prediction mode IntraPredModeC uses any of a planar prediction (0), a DC prediction (1), directional predictions (2 to 34), and a LM mode (35). The intra-prediction parameter decoding unit 304 may decode a flag indicating whether IntraPredModeC is a mode identical to the luminance mode, assign IntraPredModeY to IntraPredModeC in a case of indicating that the flag is the mode identical to the luminance mode, and decode a planar prediction (0), a DC prediction (1), directional predictions (2 to 34), and a LM mode (35) as IntraPredModeC in a case of indicating that the flag is a mode different from the luminance mode.

The loop filter 305 applies a filter such as a deblocking filter, a sample adaptive offset (SAO), and an adaptive loop filter (ALF) on a decoded image of a CU generated by the addition unit 312.

The reference picture memory 306 stores a decoded image of a CU generated by the addition unit 312 in a prescribed position for each picture and CU of a decoding target.

The prediction parameter memory 307 stores a prediction parameter in a prescribed position for each picture and prediction unit (or a subblock, a fixed size block, and a pixel) of a decoding target. Specifically, the prediction parameter memory 307 stores an inter-prediction parameter decoded by the inter-prediction parameter decoding unit 303, an intra-prediction parameter decoded by the intra-prediction parameter decoding unit 304, and a prediction mode predMode separated by the entropy decoding unit 301. For example, inter-prediction parameters stored include a prediction list utilization flag predFlagLX (the inter-prediction indicator inter_pred_idc), a reference picture index refIdxLX, and a motion vector mvLX.

A prediction mode predMode input from the entropy decoding unit 301 is input, and a prediction parameter is input from the prediction parameter decoding unit 302, to the prediction image generation unit 308. The prediction image generation unit 308 reads a reference picture from the reference picture memory 306. The prediction image generation unit 308 generates a prediction image of a PU using a prediction parameter input and a reference picture read with a prediction mode indicated by the prediction mode predMode.

Here, in a case that the prediction mode predMode indicates an inter-prediction mode, the inter-prediction image generation unit 309 generates a prediction image of a PU by an inter-prediction using an inter-prediction parameter input from the inter-prediction parameter decoding unit 303 and a read reference picture.

For a reference picture list (an L0 list or a L1 list) where a prediction list utilization flag predFlagLX is 1, the inter-prediction image generation unit 309 reads a reference picture block from the reference picture memory 306 in a position indicated by a motion vector mvLX based on a decoding target PU, from reference pictures indicated by the reference picture index refIdxLX. The inter-prediction image generation unit 309 performs a prediction based on a read reference picture block and generates a prediction image of a PU. The inter-prediction image generation unit 309 outputs the generated prediction image of the PU to the addition unit 312.

In a case that the prediction mode predMode indicates an intra-prediction mode, the intra-prediction image generation unit 310 performs an intra-prediction using an intra-prediction parameter input from the intra-prediction parameter decoding unit 304 and a read reference picture. Specifically, the intra-prediction image generation unit 310 reads out, from the reference picture memory 306, a neighboring PU within a prescribed range from the decoding target PU among the PUs, as a decoding target picture, which have already been decoded. The prescribed range refers to, for example, any of neighboring PUs on the left, upper left, upper, and upper right sides in a case that the decoding target PU is sequentially moved in the so-called raster scan order, and differs depending on intra-prediction modes. The raster scan order is an order in which the PU is sequentially moved from the left end to the right end at each row from the upper end to the lower end for each picture.

The intra-prediction image generation unit 310 performs a prediction in a prediction mode indicated by the intra-prediction mode IntraPredMode for a read neighboring PU, and generates a prediction image of a PU. The intra-prediction image generation unit 310 outputs the generated prediction image of the PU to the addition unit 312.

In a case that the intra-prediction parameter decoding unit 304 derives different intra-prediction modes with luminance and chrominance, the intra-prediction image generation unit 310 generates a prediction image of a PU of luminance by any of a planar prediction (0), a DC prediction (1), arid directional predictions (2 to 34) depending on a luminance prediction mode IntraPredModeY, and generates a prediction image of a PU of chrominance by any of a planar prediction (0), a DC prediction (1), directional predictions (2 to 34), and LM mode (35) depending on a chrominance prediction mode IntraPredModeC.

The inverse quantization and inverse DCT unit 311 inverse-quantizes quantization coefficients input from the entropy decoding unit 301 and calculates DCT coefficients. The inverse quantization and inverse DCT unit 311 performs Inverse Discrete Cosine Transform (inverse DCT) with respect to the calculated DCT coefficients, and calculates a residual signal. The inverse quantization and inverse DCT unit 311 outputs the calculated residual signal to the addition unit 312.

The addition unit 312 adds a prediction image of a PU input from the inter-prediction image generation unit 309 or the intra-prediction image generation unit 310 and a residual signal input from the inverse quantization and inverse DCT unit 311 for every pixel, and generates a decoded image of a PU. The addition unit 312 stores the generated decoded image of a PU in the reference picture memory 306, and outputs a decoded image Td where the generated decoded image of the PU is integrated for every picture to the outside.

Configuration of Image Coding Device

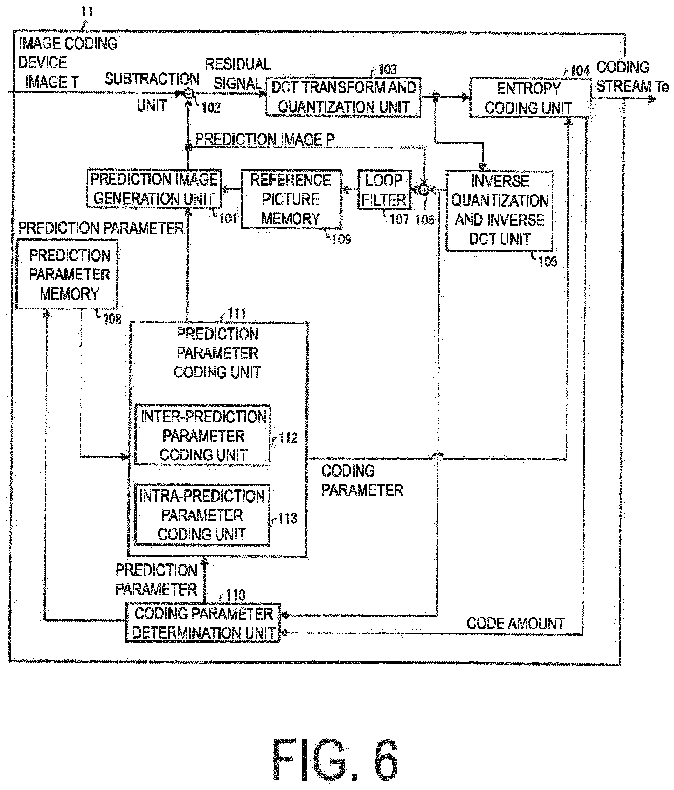

A configuration of the image coding device 11 according to the present embodiment will now be described. FIG. 6 is a block diagram illustrating a configuration of the image coding device 11 according to the present embodiment. The image coding device 11 is configured to include a prediction image generation unit 101, a subtraction unit 102, a DCT and quantization unit 103, an entropy coding unit 104, an inverse quantization and inverse DCT unit 105, an addition unit 106, a loop filter 107, a prediction parameter memory (a prediction parameter storage unit, a frame memory) 108, a reference picture memory (a reference image storage unit, a frame memory) 109, a coding parameter determination unit 110, and a prediction parameter coding unit 111. The prediction parameter coding unit 111 is configured to include an inter-prediction parameter coding unit 112 and an intra-prediction parameter coding unit 113.

For each picture of an image T, the prediction image generation unit 101 generates a prediction image P of a prediction unit PU for each coding unit CU that is a region where the picture is split. Here, the prediction image generation unit 101 reads a block that has been decoded from the reference picture memory 109, based on a prediction parameter input from the prediction parameter coding unit 111. For example, in a case of an inter-prediction, the prediction parameter input from the prediction parameter coding unit 111 is a motion vector. The prediction image generation unit 101 reads a block in a position in a reference image indicated by a motion vector starting from a target PU. In a case of an intra-prediction, the prediction parameter is, for example, an intra-prediction mode. The prediction image generation unit 101 reads a pixel value of a neighboring PU used in an intra-prediction mode from the reference picture memory 109, and generates the prediction image P of a PU. The prediction image generation unit 101 generates the prediction image P of a PU using one prediction scheme among a plurality of prediction schemes for the read reference picture block. The prediction image generation unit 101 outputs the generated prediction image P of a PU to the subtraction unit 102.

Note that the prediction image generation unit 101 operates in the same manner as the prediction image generation unit 308 having already been described.

The prediction image generation unit 101 generates the prediction image P of a PU based on a pixel value of a reference block read from the reference picture memory by using a parameter input by the prediction parameter coding unit. The prediction image generated by the prediction image generation unit 101 is output to the subtraction unit 102 and the addition unit 106.

The subtraction unit 102 subtracts a signal value of the prediction image P of a PU input from the prediction image generation unit 101 from a pixel value of a corresponding PU of the image T, and generates a residual signal. The subtraction unit 102 outputs the generated residual signal to the DCT and quantization unit 103.

The DCT and quantization unit 103 performs a DCT for the residual signal input from the subtraction unit 102, and calculates DCT coefficients. The DCT and quantization unit 103 quantizes the calculated DCT coefficients to calculate quantization coefficients. The DCT and quantization unit 103 outputs the calculated quantization coefficients to the entropy coding unit 104 and the inverse quantization and inverse DCT unit 105.

To the entropy coding unit 104, quantization coefficients are input from the DCT and quantization unit 103, and coding parameters are input from the prediction parameter coding unit 111. For example, input coding parameters include codes such as a reference picture index refIdxLX, a prediction vector index mvp_LX_idx, a difference vector mvdLX, a prediction mode predMode, and a merge index merge_idx.

The entropy coding unit 104 entropy-codes the input quantization coefficients and coding parameters to generate the coding stream Te, and outputs the generated coding stream Te to the outside.

The inverse quantization and inverse DCT unit 105 inverse-quantizes the quantization coefficients input from the DCT and quantization unit 103 to calculate DCT coefficients. The inverse quantization and inverse DCT unit 105 performs inverse DCT on the calculated DCT coefficient to calculate residual signals. The inverse quantization and inverse DCT unit 105 outputs the calculated residual signals to the addition unit 106.

The addition unit 106 adds signal values of the prediction image P of the PUs input from the prediction image generation unit 101 and signal values of the residual signals input from the inverse quantization and inverse DCT unit 105 for every pixel, and generates the decoded image. The addition unit 106 stores the generated decoded image in the reference picture memory 109.

The loop filter 107 applies a deblocking filter, a sample adaptive offset (SAO), and an adaptive loop filter (ALF) to the decoded image generated by the addition unit 106.

The prediction parameter memory 108 stores the prediction parameters generated by the coding parameter determination unit 110 for every picture and CU of the coding target in a prescribed position.

The reference picture memory 109 stores the decoded image generated by the loop filter 107 for every picture and CU of the coding target in a prescribed position.

The coding parameter determination unit 110 selects one set among a plurality of sets of coding parameters. The coding parameter is the above-mentioned prediction parameter or a parameter to be a target of coding generated associated with the prediction parameter. The prediction image generation unit 101 generates the prediction image P of the PUs using each of the sets of these coding parameters.

The coding parameter determination unit 110 calculates cost values indicating a volume of an information quantity and coding errors for each of the plurality of sets. For example, a cost value is a sum of a code amount and a value of multiplying a coefficient $\lambda$ by a square error. The code amount is an information quantity of the coding stream Te obtained by entropy coding a quantization error and a coding parameter. The square error is a sum total of square values of residual values of residual signals calculated in the subtraction unit 102 between pixels. The coefficient $\lambda$ is a

real number that is larger than a pre-configured zero. The coding parameter determination unit 110 selects a set of coding parameters by which the calculated cost value is minimized. With this configuration, the entropy coding unit 104 outputs the selected set of coding parameters as the coding stream Te to the outside, and does not output sets of coding parameters that are not selected. The coding parameter determination unit 110 stores the determined coding parameters in the prediction parameter memory 108.

The prediction parameter coding unit 111 derives a format for coding from parameters input from the coding parameter determination unit 110, and outputs the format to the entropy coding unit 104. A derivation of a format for coding is, for example, to derive a difference vector from a motion vector and a prediction vector. The prediction parameter coding unit 111 derives parameters necessary to generate a prediction image from parameters input from the coding parameter determination unit 110, and outputs the parameters to the prediction image generation unit 101. For example, parameters necessary to generate a prediction image are a motion vector of a subblock unit.

The inter-prediction parameter coding unit 112 derives inter-prediction parameters such as a difference vector, based on prediction parameters input from the coding parameter determination unit 110. The inter-prediction parameter coding unit 112 includes a partly identical configuration to a configuration by which the inter-prediction parameter decoding unit 303 (see FIG. 5 and the like) derives inter-prediction parameters, as a configuration to derive parameters necessary for generation of a prediction image output to the prediction image generation unit 101. A configuration of the inter-prediction parameter coding unit 112 will be described below.

The intra-prediction parameter coding unit 113 derives a format for coding (for example, MPM_idx and rem_intra_luma_pred_mode) from the intra-prediction mode IntraPredMode input from the coding parameter determination unit 110.

Configuration of Main Portion of Image Decoding Device

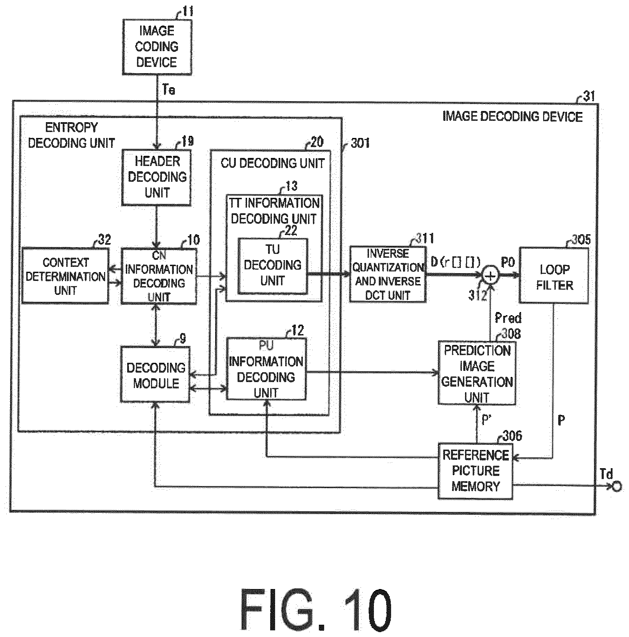

FIG. 10 is a block diagram illustrating a configuration of a main portion of an image decoding device according to the present embodiment. In FIG. 10, some members included in the block diagram illustrated in FIG. 5 are omitted in the drawing for the sake of simplicity. For convenience of explanation, members having the same functions as those of the members illustrated in FIG. 5 are assigned the same reference signs, and descriptions thereof will be omitted.

As illustrated in FIG. 10, an image decoding device 31 includes an entropy decoding unit 301, a prediction image generation unit 308, an inverse quantization and inverse DCT converter 311, a reference picture memory 306, an addition unit 312, and a loop filter 305. The entropy decoding unit 301 includes a decoding module 9, a CN information decoding unit 10 (split information decoding unit), a header decoding unit 19, a CU decoding unit 20, and a context determination unit 32. The CU decoding unit 20 further includes a PU information decoding unit 12 and a TT information decoding unit 13 (split information decoding unit, splitting unit), and the TT information decoding unit 13 further includes a TU decoding unit 22.

Decoding Module

The general operation of each module will be described below. The decoding module 9 performs decoding processing to decode a syntax value from the binary. More specifically, the decoding module 9 decodes a syntax value coded by a variable-length coding scheme such as CABAC or a fixed-length coding scheme based on coding data and syntax types supplied from a supply source, and returns the decoded syntax value to the supply source.

In the examples given below, the supply sources of the coding data and the syntax types are the CN information decoding unit 10 and the CU decoding unit 20 (the PU information decoding unit 12 and the TT information decoding unit 13).

Header Decoding Unit

The header decoding unit 19 decodes a video parameter set (VPS), an SPS, a PPS, and a slice header of the coding data input from the image coding device 11.

CN Information Decoding Unit

The CN information decoding unit 10 uses the decoding module 9 to perform decoding processing of the coding tree unit (CTU) and the coding node (CN) with respect to the coding data input from the image coding device 11. Specifically, the CN information decoding unit 10 decodes CTU information and CN information from the coding data in accordance with the following procedure.

First, the CN information decoding unit 10 (split information decoding unit) decodes a tree unit header CTUH from the CTU information included in the CTU using the decoding module 9. Next, the CN information decoding unit 10 decodes a QT split flag from the CN information included in the CN in accordance with a context (to be explained later) of the QT split flag (split information) indicating whether or not to perform a QT split on the target CN. Then, the CN information decoding unit 10 recursively splits and decodes the target CN until the QT split flag does not signal an additional split any more. Finally, a tree unit footer CTUF is decoded from the CTU information.

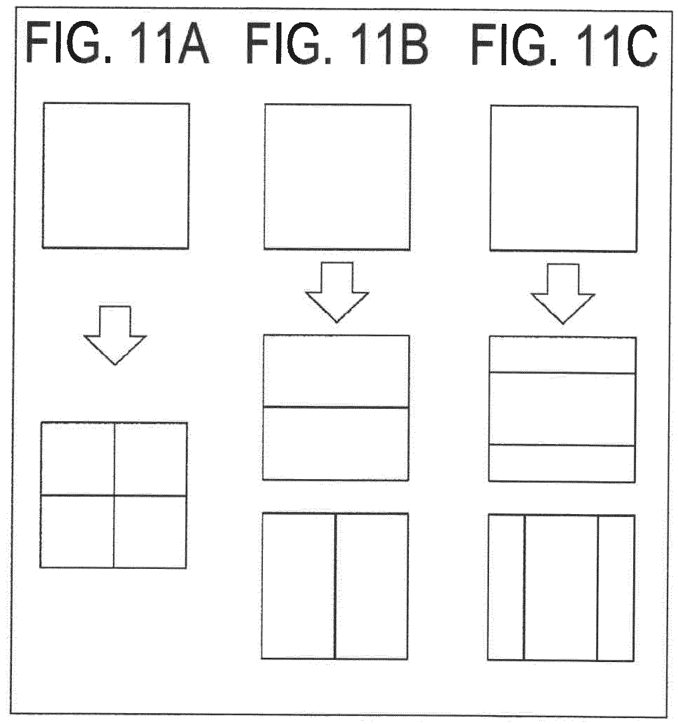

Although, in the present embodiment, an example in which CN information to be decoded is a QT split flag (qt_split_flag) is described, CN information to be decoded may be a BT split flag (bt_split_flag) indicating whether or not to perform a BT (binary tree) split on the target CN, or a TT split flag (tt_split_flag) indicating whether or not to perform a TT (triple tree) split on the target CN. FIGS. 11A to 11C are diagrams illustrating a QT split, BT split, and TT split, respectively. In each of the drawings, a block indicated by an arrow is a block after the split. As illustrated in FIG. 11A, the QT split is a split in which a block is split into four pieces. As illustrated in FIG. 11B, the BT split is a split in which a block is split into two pieces. As illustrated in FIG. 11C, the TT split is a split in which a block is split into three pieces.

Although the image decoding device 31 according to the present embodiment splits CNs, it may split blocks of CUs, PUs, TUs, or the like by a similar method. In that case, the above-mentioned target CN may be a target CU, a target PU, a target TU, or the like.

The tree unit header CTUH and the tree unit footer CTUF include coding parameters referred to by the image decoding device 31 to determine a decoding method for the target coding tree unit. The CN information may include, in addition to the QT split flag, a BT direction flag (BT split mode) to be explained later, and parameters applied to the target CN and the coding node at a lower level.

Context Determination Unit

The context determination unit 32 acquires split-related information of a target CN and split-related information of a neighboring CN. The split-related information of a CN is information related to a split situation of the CN, and is information including, for example, a partition number, a depth or vertical and horizontal depths, or a size of the CN.

Next, the context determination unit 32 compares the acquired split-related information of the target CN with that of the neighboring CN.

Further, the context determination unit 32 determines a context in accordance with the comparison result. The context determined by the context determination unit 32 is output to the CN information decoding unit 10.

The context in the present specification indicates a context index in CABAC. In CABAC, binarization processing is performed on various types of syntax representing conversion coefficients, and arithmetic coding of binary data obtained by the binarization processing is performed. Here, as the above-mentioned various types of syntax, for example, the following can be cited: the flag qt_split_flag indicating whether or not to perform the QT split; a flag indicating whether or not the conversion coefficient is 0, that is, a flag significant_coeff_flag (also referred to as a conversion coefficient presence/absence flag) indicating presence/absence of a non-zero conversion coefficient; and syntax of last_significant_coeff_x and last_significant_coeff_y indicating a position of the last non-zero conversion coefficient in the order of processing.

Additionally, in CABAC, in a case that one symbol (one bit of binary data, also referred to as Bin) is coded, a context index corresponding to the processing target symbol is referred to, and arithmetic coding is performed in accordance with a generation probability specified by the context index. The generation probability is updated every time a symbol is coded.

In the present specification, a context corresponding to qt_split_flag as the QT split flag is indicated by ctxIdxQT (or ctxIdxSplit). A context corresponding to bt_split_flag as the BT split flag is indicated by ctxIdxBT (or ctxIdxSplit). A context corresponding to tt_split_flag as the TT split flag is indicated by ctxIdxTT (or ctxIdxSplit). A context corresponding to bt_dir_flag or tt_dir_flag as the BT split direction flag or the TT split direction flag is indicated by ctxIdxDir. In other words, ctxIdxDir is a context indicating whether a horizontal split or a vertical split is taken as the split direction.

Further, in the present specification, in a case that the BT split and the TT split are not distinguished and a split including both of them is taken as a PT split, a context corresponding to pt_split_flag as a PT split flag is indicated by ctxIdxPT (or ctxIdxSplit). A context corresponding to pt_dir_flag as a PT split direction flag is indicated by ctxIdxDir. A context corresponding to pt_pat_flag as a PT split pattern flag is indicated by ctxIdxPat.

CU Decoding Unit

The CU decoding unit 20 is constituted of the PU information decoding unit 12 and the TT information decoding unit 13, and decodes PUI information and TTI information of a coding node CN of the lowest level (in other words, a CU).

PU Information Decoding Unit

The PU Information decoding unit 12 decodes, using the decoding module 9, PU information of each PU (the merge flag (merge_flag), merge index (merge_idx), prediction vector index (mvp_idx), reference image index (ref idx), inter-prediction indicator (inter_pred_flag), difference vector (mvd), and the like).

TT Information Decoding Unit

The TT information decoding unit 13 decodes, using the decoding module 9, TT information of the transform tree TT (a TU split flag SP_TU (split_transform_flag), a TU residual flag CBP_TU (cbf_cb, cbf_cr, cbf_luma) and the like, and a TU).

The TT information decoding unit 13 includes the TU decoding unit 22. The TU decoding unit 22 decodes QP update information (quantization correction value) in a case that the TU includes a residual. The QP update information is a value indicating a difference value from a quantization parameter prediction value qPpred, which is a prediction value of a quantization parameter QP. The TU decoding unit 22 decodes a quantization prediction residual (residual_coding).

Context Determination Method

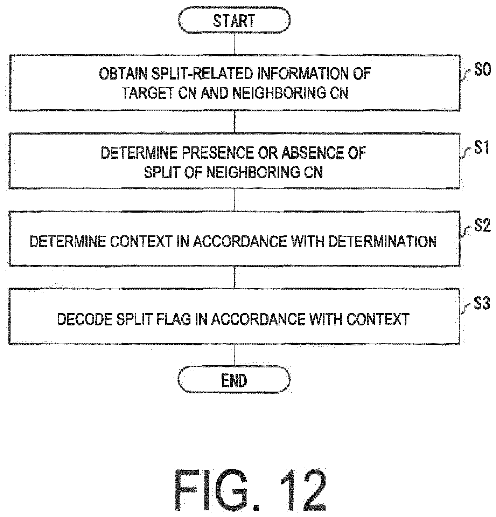

A method for determining a context by the image decoding device 31 according to the present embodiment will be described in detail with reference to FIG. 12. FIG. 12 is a flowchart explaining an example of a context determination method performed by the image decoding device 31 according to the present embodiment.

The context determination unit 32 acquires, from the CN information decoding unit 10, split-related information of the target CN (target block) which the CN information decoding unit 10 has not split yet, and split-related information of a neighboring CN (neighboring block) which is adjacent to the target CN and has already been split and decoded by the CN information decoding unit 10. (step S0). Although, in the present specification, an example in which a target CN is used as a target block and a neighboring CN is used as a neighboring block is given, the target block and the neighboring block may be a CU, PU, or TU. In a case where the target block and the neighboring block are a CU, PU, or TU, the context determination method according to the present embodiment can be similarly performed, and it is possible to determine a context indicating a probability of decoding a QT split flag indicating whether or not to split the target CU, the target PU, or the target TU.

The context determination unit 32 specifies a split situation with reference to the acquired target CN and neighboring CN, so as to determine whether or not there exists a split line of the neighboring CN adjacent to each side (e.g., an upper side or a left side) of the target CN (step S1). A specific method of step S1 will be described later.

The context determination unit 32 determines the context in accordance with the determined split situation (step S2). A specific method of step S2 will be described later.

The CN information decoding unit 10 decodes a QT split flag indicating whether or not to perform a QT split on the target CN from the CN information included in the CN, in accordance with the context determined by the context determination unit 32 (step S3).

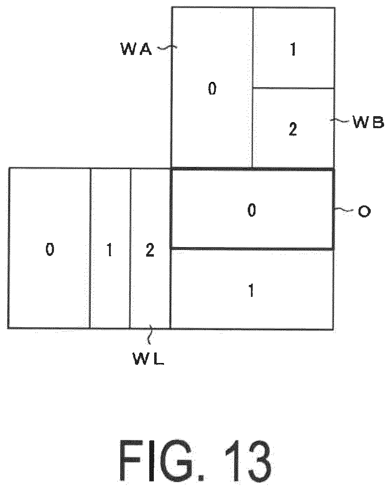

A specific method of the context determination method of the present embodiment will be described below. FIG. 13 is a diagram for explaining step S1 of the context determination method of the present embodiment, where a target block O, a neighboring block WL, a neighboring block WA, and a neighboring block WB are illustrated. As illustrated in FIG. 13, the target block O is adjacent to the neighboring block WL on the left side. In addition, the target block O is adjacent to the neighboring block WA and the neighboring block WB on the upper side. A number in each block in FIG. 13 represents a partition number.

In the following description, the context determination unit 32 derives a vertical-direction split flag split Vertically. and a horizontal-direction split flag splitHorizontally; these may also be referred to as a horizontal split flag horSplit and a vertical split flag verSplit, respectively. In summary, the relationship of equivalent flags is as follows.

    splitVertically = horSplit
    splitHorizontally = verSplit

Furthermore, in a case that a vertical-direction split flag splitVertically is derived from the left neighboring block, splitVertically is also referred to as splitLeft; in a case that a horizontal-direction split flag splitHorizonally is derived from the upper neighboring block, splitHorizonally is also referred to as splitAbove.

First, in step S1, the context determination unit 32 references the split-related information of the neighboring block WL acquired in step S0 to determine whether or not there exists a split line adjacent to an edge where the neighboring block WL is adjacent to the target block O (that is, the left side of the target block O). The context determination unit 32 outputs the result of determining the presence/absence of a split line as a vertically split flag splitVertically (hereinafter, may also be referred to as splitLeft or a horizontal split flag horSplit). As illustrated in FIG. 13, because no split line is adjacent to the left side of the target block O, the context determination unit 32 sets a relation of splitVertically (= splitLeft = horSplit) = 0, which indicates that there exists no split line.

Further, the context determination unit 32 references the split-related information of the neighboring block WA and the neighboring block WB acquired in step S0 to determine whether or not there exists a split line adjacent to an edge where a joined block of the neighboring block WA and neighboring block WB is adjacent to the target block O (that is, the upper side of the target block O). Then, the context determination unit 32 outputs the result of determining the presence/absence of a split line as a horizontal split flag splitHorizontally (hereinafter, may also be referred to as splitAbove or a vertical split flag verSplit). As illustrated in FIG. 13, because there is a split line adjacent to the upper side of the target block O, the context determination unit 32 sets a relation of splitHorizontally (= splitAbove = verSplit) = 1, which indicates that there exists a split line.

Next, in step S2, the context determination unit 32 references the set splitVertically and splitHorizontally to derive a context ctxIdxSplit of whether or not to split the target block by the following equation, for example.

$$\mathrm{ctxIdxSplit} = \mathrm{splitVertically} + \mathrm{splitHorizontally}\ (= \mathrm{splitLeft} + \mathrm{splitAbove} = \mathrm{horSplit} + \mathrm{verSplit})$$

In the case of the example of the neighboring blocks illustrated in FIG. 13, since a relation of splitVertically = 0, and a relation of splitHorizontally = 1 are satisfied, the context determination unit 32 outputs a relation of ctxIdxSplit = 1. The generation probability specified by a probability state index included in context variables indicated by the context is set and updated to be high depending on the presence of split lines. In other words, by switching the contexts depending on whether or not there exists a split line of the neighboring block, the CN information decoding unit 10 can reduce the code amounts by decoding a split flag indicating "the presence of a split" in the target block O in the case that there is a split line in the neighboring block. The reason for the above setting is such that, in the case where the neighboring block WA or WB is split, there is a high probability that the target block O will be split as well.

In the following specific examples, a specific example of steps S1 and S2 in the context determination method described above will be described in detail with reference to the drawings.

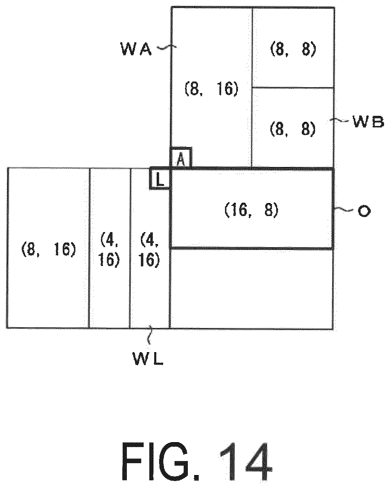

FIG. 14 is a diagram illustrating step S1 of the context determination method according to the present specific example, and illustrates the target block O, the neighboring block WL, and the neighboring block WA. As illustrated in FIG. 14, the target block O is adjacent to the neighboring block WL on the left side. In addition, the target block O is adjacent to the neighboring block WA on the upper side. Also, as illustrated in FIG. 14, the neighboring block WL includes the point L (xPb - 1, yP) on the left side of the target block O, and the neighboring block WA includes the point A (xPb, yPb - 1) on the upper side of the target block O. Note that, as for (n, m) in each block in FIG. 14, n indicates a width of each block in a horizontal direction and m indicates a height in a vertical direction (n and m are integers).

First, in step S1, the context determination unit 32 refers to the split-related information for the target block O and the neighboring block WL, compares a height heightCurr of the target block O with a height heightLeft of the neighboring block WL including the point L, and determines whether or not the height heightCurr of the target block O is larger than the height heigthLeft of the neighboring block WL. The equation for the determination will be provided below.

$$\mathrm{splitVertically}\ (= \mathrm{splitLeft} = \mathrm{horSplit}) = \mathrm{heightLeft} < \mathrm{heightCurr}\ ?\ 1 : 0$$

In a case that the height of the target block O is larger than the height of the neighboring block WL, the neighboring block WL is a block formed by being horizontally split a larger number of times than the target block O, so the context determination unit 32 determines that a split line adjacent to the left side of the target block O exists. On the other hand, in a case that the height of the target block O is smaller than the height of the neighboring block WL, the target block O is a block formed by being horizontally split a larger number of times than the neighboring block WL, so the context determination unit 32 determines that no split line adjacent to the left side of the target block O exists. Note that in a case that the height of the target block O and the height of the neighboring block WL are equal, the context determination unit 32 determines that no split line adjacent to the left side of the target block O exists in a horizontal direction.

The context determination unit 32 outputs, as splitVertically, a result of the determination of whether or not the height of the target block O is larger than the height of the neighboring block WL. As illustrated in FIG. 16, since the height of the target block O is smaller than the height of the neighboring block WL, the context determination unit 32 configures splitVertically = 0 indicating that no split line exists.

The context determination unit 32 refers to the split-related information of the target block O and the neighboring block WA, compares a width widthCurr of the target block O with a width widthAbove of the neighboring block WA including the neighboring block A and determines whether or not the width widthCurr of the target block O is larger than the width widthAbove of the neighboring block WA. The equation for the determination will be provided below.

$$\text{splitHorizontally} (= \text{splitAbove} = \text{verSplit}) = \text{widthAbove} < \text{widthCurr} \; ? \; 1 : 0$$

In a case that the width of the target block O is larger than the width of the neighboring block WA, the neighboring block WA is a block formed by being vertically split a larger number of times than the target block O, so the context determination unit 32 determines that a split line adjacent to the upper side of the target block O exists. On the other hand, in a case that the width of the target block O is smaller than the width of the neighboring block WA, the target block O is a block formed by being vertically split a larger number of times than the neighboring block WA, so the context determination unit 32 determines that no split line adjacent to the upper side of the target block O exists. Note that in a case that the width of the target block O and the width of the neighboring block WA are equal, the context determination unit 32 determines that no split line adjacent to the upper side of the target block O exists.

The context determination unit 32 outputs, as splitHorizontally, a result of whether or not the width of the target block O is larger than the width of the neighboring block WA. As illustrated in FIG. 16, the width of the target block O is larger than the width of the neighboring block WA, and thus the context determination unit 32 configures splitHorizontally = 1 indicating that a split line is present.

Next, in step S2, the context determination unit 32 refers to the configured splitVertically and splitHorizontally to determine the context ctxIdxSplit = splitVertically + splitHorizontally (= splitLeft + splitUpper). In the case of the present specific example, splitVertically = 0 and splitHorizontally = 1 are satisfied, and thus the context determination unit 32 outputs ctxIdxSplit = 1.

Image Coding Device

The configuration of the image decoding device 31 according to the present embodiment can also be applied to the image coding device 11. In such a case, the image coding device 11 includes a CN information coding unit (not illustrated) instead of the CN information decoding unit 10, and the context determination unit 32, and derives the context of the split flag (QT split flag, BT split flag, TT split flag, or the like) indicating whether to split the target block or not.

In the image coding device 11 having the above-described configuration, the context determination unit 32 obtains the split-related information of the target block that has not been split yet and the split-related information of the neighboring block that is adjacent to the target block and that has already been split. Next, the context determination unit 32 refers to the split-related information of the target block and the neighboring blocks to determine whether or not a split line exists in each neighboring block that is adjacent to each side of the target block by identifying a split situation of each neighboring block. Next, the context determination unit 32 determines the context in response to the determination. Next, the CN information coding unit codes the split flag indicating whether or not to split the target block depending on the context determined by the context determination unit 32.

Summary of First Embodiment

As described above, the image decoding device 31 according to the present embodiment determines the context of the split information (the split flag) of the target block with reference to a split situation of at least one neighboring block adjacent to the target block, and uses the context to decode the split information of the target block.

Implementation Examples by Software

Note that, part of the image coding device 11 and the image decoding device 31 in the above-mentioned embodiments, for example, the entropy decoding unit 301, the prediction parameter decoding unit 302, the loop filter 305, the prediction image generation unit 308, the inverse quantization and inverse DCT unit 311, the addition unit 312, the prediction image generation unit 101, the subtraction unit 102, the DCT and quantization unit 103, the entropy coding unit 104, the inverse quantization and inverse DCT unit 105, the loop filter 107, the coding parameter determination unit 110, and the prediction parameter coding unit 111 may be realized by a computer. In that case, this configuration may be realized by recording a program for realizing such control functions on a computer-readable recording medium and causing a computer system to read the program recorded on the recording medium for execution. Note that it is assumed that the "computer system" mentioned here refers to a computer system built into either the image coding device 11 or the image decoding device 31, and the computer system includes an OS and hardware components such as a peripheral apparatus. Furthermore, the "computer-readable recording medium" refers to a portable medium such as a flexible disk, a magneto-optical disk, a ROM, a CD-ROM, and the like, and a storage apparatus such as a hard disk built into the computer system. Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the program may be configured to realize some of the functions described above, and also may be configured to be capable of realizing the functions described above in combination with a program already recorded in the computer system.

Part or all of the image coding device 11 and the image decoding device 31 in the above-described embodiments may be realized as an integrated circuit such as a Large Scale Integration (LSI). Each function block of the image coding device 11 and the image decoding device 31 may be individually realized as processors, or part or all may be integrated into processors. Furthermore, a circuit integration technique is not limited to the LSI, and may be realized with a dedicated circuit or a general-purpose processor.

Furthermore, in a case where with advances in semiconductor technology, a circuit integration technology with which an LSI is replaced appears, an integrated circuit based on the technology may be used.

The embodiment of the disclosure has been described in detail above referring to the drawings, but the specific configuration is not limited to the above embodiments and various amendments can be made to a design that fall within the scope that does not depart from the gist of the disclosure.

Application Examples

The above-mentioned image coding device 11 and the image decoding device 31 can be utilized being installed to various apparatuses performing transmission, reception, recording, and regeneration of videos. Note that, videos may be natural videos imaged by cameras or the like, or may be artificial videos (including CG and GUI) generated by computers or the like.

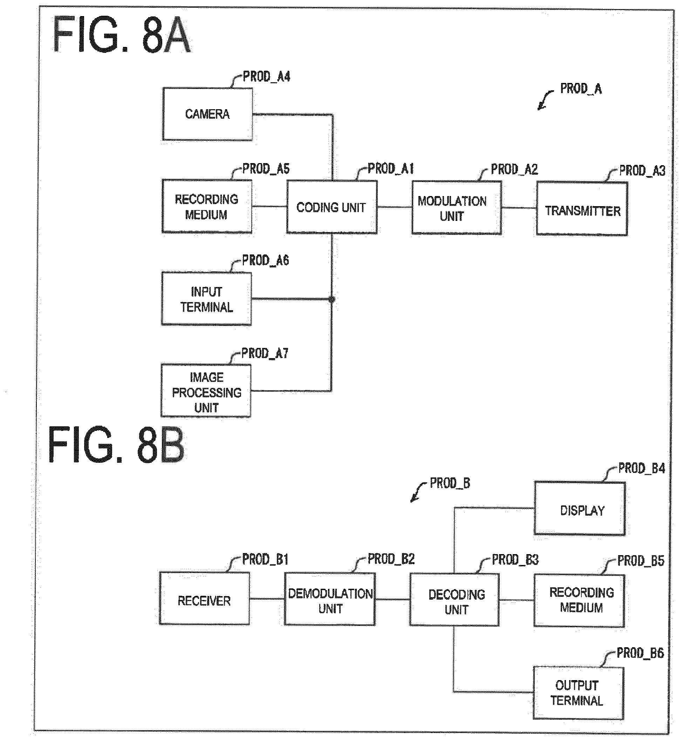

First, referring to FIGS. 8A and 8B, it will be described that the above-mentioned image coding device 11 and the image decoding device 31 can be utilized for transmission and reception of videos.

FIG. 8A is a block diagram illustrating a configuration of a transmitting apparatus PROD_A installed with the image coding device 11. As illustrated in FIG. 8A, the transmitting apparatus PROD_A includes a coding unit PROD_A1 which obtains coded data by coding videos, a modulation unit PROD_A2 which obtains modulating signals by modulating carrier waves with the coded data obtained by the coding unit PROD_A1, and a transmitter PROD_A3 which transmits the modulating signals obtained by the modulation unit PROD_A2. The above-mentioned image coding device 11 is utilized as the coding unit PROD_A1.

The transmitting apparatus PROD_A may further include a camera PROD_A4 imaging videos, a recording medium PROD_A5 for recording videos, an input terminal PROD_A6 to input videos from the outside, and an image processing unit A7 which generates or processes images, as sources of supply of the videos input into the coding unit PROD_A1. In FIG. 8A, although the configuration where the transmitting apparatus PROD_A includes all of these is exemplified, some may be omitted.

Note that the recording medium PROD_A5 may record videos which are not coded, or may record videos coded in a coding scheme for record different than a coding scheme for transmission. In the latter case, a decoding unit (not illustrated) to decode coded data read from the recording medium PROD_A5 according to coding scheme for recording may be interleaved between the recording medium PROD_A5 and the coding unit PROD_A1.

FIG. 8B is a block diagram illustrating a configuration of a receiving apparatus PROD B installed with the image decoding device 31. As illustrated in FIG. 8B, the receiving apparatus PROD_B includes a receiver PROD_B1 which receives modulating signals, a demodulation unit PROD_B2 which obtains coded data by demodulating the modulating signals received by the receiver PROD_B1, and a decoding unit PROD_B3 which obtains videos by decoding the coded data obtained by the demodulation unit PROD_B2. The above-mentioned image decoding device 31 is utilized as the decoding unit PROD B3.

The receiving apparatus PROD_B may further include a display PROD_B4 displaying videos, a recording medium PROD_B5 to record the videos, and an output terminal PROD_B6 to output videos outside, as the supply destination of the videos output by the decoding unit PROD_B3. In FIG. 8B, although the configuration that the receiving apparatus PROD B includes these all is exemplified, a part may be omitted.

Note that the recording medium PROD_B5 may record videos which are not coded, or may record videos which are coded in a coding scheme different from a coding scheme for transmission. In the latter case, a coding unit (not illustrated) to code videos acquired from the decoding unit PROD_B3 according to a coding scheme for recording may be interleaved between the decoding unit PROD B3 and the recording medium PROD B5.

Note that the transmission medium transmitting modulating signals may be wireless or may be wired. The transmission aspect to transmit modulating signals may be broadcasting (here, referred to as the transmission aspect where the transmission target is not specified beforehand) or may be telecommunication (here, referred to as the transmission aspect that the transmission target is specified beforehand). Thus, the transmission of the modulating signals may be realized by any of radio broadcasting, cable broadcasting, radio communication, and cable communication.

For example, broadcasting stations (broadcasting equipment, and the like)/receiving stations (television receivers, and the like) of digital terrestrial television broadcasting is an example of transmitting apparatus PROD_A/receiving apparatus PROD_B transmitting and/or receiving modulating signals in radio broadcasting. Broadcasting stations (broadcasting equipment, and the like)/receiving stations (television receivers, and the like) of cable television broadcasting are an example of transmitting apparatus PROD_A/receiving apparatus PROD_B transmitting and/or receiving modulating signals in cable broadcasting.

Servers (work stations, and the like)/clients (television receivers, personal computers, smartphones, and the like) for Video On Demand (VOD) services, video hosting services using the Internet and the like are an example of transmitting apparatus PROD_A/receiving apparatus PROD_B transmitting and/or receiving modulating signals in telecommunication (usually, either radio or cable is used as transmission medium in the LAN, and cable is used for as transmission medium in the WAN). Here, personal computers include a desktop PC, a laptop type PC, and a graphics tablet type PC. Smartphones also include a multifunctional portable telephone terminal.

Note that a client of a video hosting service has a function to code a video imaged with a camera and upload the video to a server, in addition to a function to decode coded data downloaded from a server and to display on a display. Thus, a client of a video hosting service functions as both the transmitting apparatus PROD_A and the receiving apparatus PROD_B.

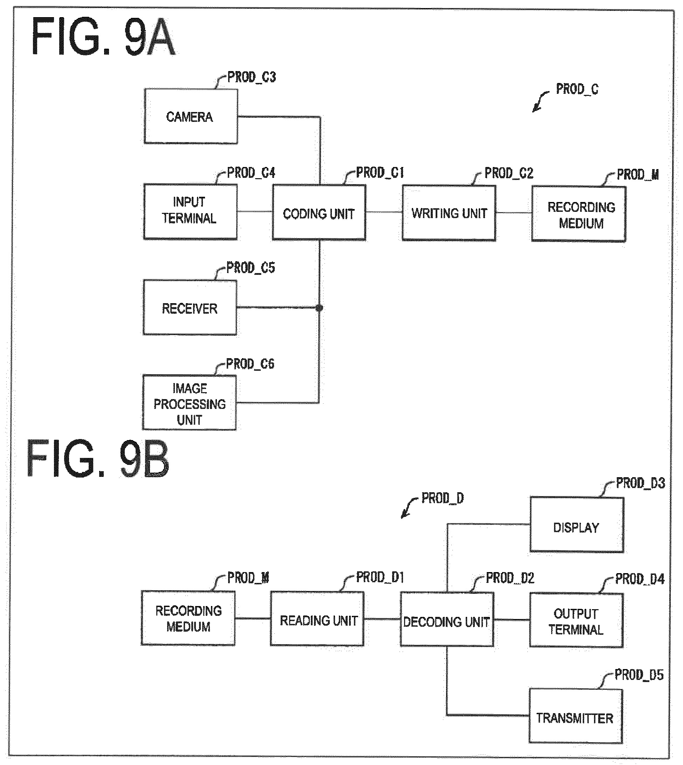

Next, referring to FIGS. 9A and 9B, it will be described that the above-mentioned image coding device 11 and the image decoding device 31 can be utilized for recording and regeneration of videos.

FIG. 9A is a block diagram illustrating a configuration of a recording apparatus PROD_ C installed with the above-mentioned image coding device 11. As illustrated in FIG. 9A, the recording apparatus PROD_C includes a coding unit PROD_C1 which obtains coded data by coding a video, and a writing unit PROD_C2 which writes the coded data obtained by the coding unit PROD_C1 in a recording medium PROD_M. The above-mentioned image coding device 11 is utilized as the coding unit PROD C1.

Note that the recording medium PROD M may be (1) a type built in the recording apparatus PROD_C such as Hard Disk Drive (HDD) or Solid State Drive (SSD), may be (2) a type connected to the recording apparatus PROD_C such as an SD memory card or a Universal Serial Bus (USB) flash memory, and may be (3) a type loaded in a drive apparatus (not illustrated) built in the recording apparatus PROD_C such as Digital Versatile Disc (DVD) or Blu-ray Disc (BD: trade name).

The recording apparatus PROD_C may further include a camera PROD_C3 imaging a video, an input terminal PROD_C4 to input the video from the outside, a receiver PROD C5 to receive the video, and an image processing unit PROD_C6 which generates or processes images, as sources of supply of the video input into the coding unit PROD_C1. In FIG. 9A, although the configuration that the recording apparatus PROD_C includes these all is exemplified, a part may be omitted.

Note that the receiver PROD C5 may receive a video which is not coded, or may receive coded data coded in a coding scheme for transmission different from a coding scheme for recording. In the latter case, a decoding unit (not illustrated) for transmission to decode coded data coded in a coding scheme for transmission may be interleaved between the receiver PROD_C5 and the coding unit PROD_C1.

Examples of such recording apparatus PROD C include a DVD recorder, a BD recorder, a Hard Disk Drive (HDD) recorder, and the like (in this case, the input terminal PROD_C4 or the receiver PROD C5 is the main source of supply of a video). A camcorder (in this case, the camera PROD_C3 is the main source of supply of a video), a personal computer (in this case, the receiver PROD_C5 or the image processing unit C6 is the main source of supply of a video), a smartphone (in this case, the camera PROD_C3 or the receiver PROD_C5 is the main source of supply of a video), or the like is an example of such recording apparatus PROD_C.

FIG. 9B is a block diagram illustrating a configuration of a regeneration apparatus PROD_D installed with the above-mentioned image decoding device 31. As illustrated in FIG. 9B, the regeneration apparatus PROD_D includes a reading unit PROD DI which reads coded data written in the recording medium PROD M, and a decoding unit PROD_D2 which obtains a video by decoding the coded data read by the reading unit PROD_D1. The above-mentioned image decoding device 31 is utilized as the decoding unit PROD D2.

Note that the recording medium PROD M may be (1) a type built into the regeneration apparatus PROD_D such as HDD or SSD, may be (2) a type connected to the regeneration apparatus PROD_D such as an SD memory card or a USB flash memory, and may be (3) a type loaded in a drive apparatus (not illustrated) built into the regeneration apparatus PROD_D such as DVD or BD.

The regeneration apparatus PROD D may further include a display PROD_D3 displaying a video, an output terminal PROD_D4 to output the video to the outside, and a transmitter PROD_D5 which transmits the video, as the supply destination of the video output by the decoding unit PROD_D2. In FIG. 9B, although the configuration that the regeneration apparatus PROD_D includes these all is exemplified, a part may be omitted.

Note that the transmitter PROD_D5 may transmit a video which is not coded, or may transmit coded data coded in a coding scheme for transmission different than a coding scheme for recording. In the latter case, a coding unit (not illustrated) to code a video in a coding scheme for transmission may be interleaved between the decoding unit PROD_D2 and the transmitter PROD_D5.

Examples of such regeneration apparatus PROD_D include a DVD player, a BD player, an HDD player, and the like (in this case, the output terminal PROD_D4 to which a television receiver, and the like is connected is the main supply target of the video). A television receiver (in this case, the display PROD_D3 is the main supply target of the video), a digital signage (also referred to as an electronic signboard or an electronic bulletin board, and the like, the display PROD_D3 or the transmitter PROD_D5 is the main supply target of the video), a desktop PC (in this case, the output terminal PROD_D4 or the transmitter PROD_D5 is the main supply target of the video), a laptop type or graphics tablet type PC (in this case, the display PROD_D3 or the transmitter PROD_D5 is the main supply target of the video), a smartphone (in this case, the display PROD_D3 or the transmitter PROD_D5 is the main supply target of the video), or the like is an example of such regeneration apparatus PROD_D.

Realization as Hardware and Realization as Software

Each block of the above-mentioned image decoding device 31 and the image coding device 11 may be realized as a hardware by a logical circuit formed on an integrated circuit (IC chip), or may be realized as a software using Central Processing Unit (CPU).

In the latter case, each apparatus includes a CPU performing a command of a program to implement each function, a Read Only Memory (ROM) storing the program, a Random Access Memory (RAM) developing the program, and a storage apparatus (recording medium) such as a memory storing the program and various data, and the like. The purpose of the embodiments of the disclosure can be achieved by supplying, to each of the apparatuses, the recording medium recording readably the program code (execution form program, intermediate code program, source program) of the control program of each of the apparatuses which is a software implementing the above-mentioned functions with a computer, and reading and performing the program code recorded in the recording medium with the computer (or a CPU or an MPU).

For example, as the recording medium, a tape such as a magnetic tape or a cassette tape, a disc including a magnetic disc such as a floppy (trade name) disk / a hard disk and an optical disc such as a Compact Disc Read-Only Memory (CD-ROM) / Magneto-Optical disc (MO disc) / Mini Disc (MD) / Digital Versatile Disc (DVD) / CD Recordable (CD-R) / Blu-ray Disc (trade name), a card such as an IC card (including a memory card) / an optical memory card, a semiconductor memory such as a mask ROM / Erasable Programmable Read-Only Memory (EPROM) / Electrically Erasable and Programmable Read-Only Memory (EEPROM: trade name) / a flash ROM, or a Logical circuits such as a Programmable logic device (PLD) or a Field Programmable Gate Array (FPGA) can be used.

Each of the apparatuses is configured to be connectable with a communication network, and the program code may be supplied through the communication network. This communication network may be able to transmit a program code, and is not specifically limited. For example, the Internet, the intranet, the extranet, Local Area Network (LAN), Integrated Services Digital Network (ISDN), Value-Added Network (VAN), a Community Antenna television/Cable Television (CATV) communication network, Virtual Private Network, telephone network, a mobile communication network, satellite communication network, and the like are available. A transmission medium constituting this communication network may also be a medium which can transmit a program code, and is not limited to a particular configuration or a type. For example, a cable communication such as Institute of Electrical and Electronic Engineers (IEEE) 1394, a USB, a power line carrier, a cable TV line, a phone line, an Asymmetric Digital Subscriber Line (ADSL) line, and a radio communication such as infrared ray such as Infrared Data Association (IrDA) or a remote control, Bluetooth (trade name), IEEE 802.11 radio communication, High Data Rate (HDR), Near Field Communication (NFC), Digital Living Network Alliance (DLNA: trade name), a cellular telephone network, a satellite channel, a terrestrial digital broadcast network are available. Note that the embodiments of the disclosure can be also realized in the form of computer data signals embedded in a carrier wave where the program code is embodied by electronic transmission.

The embodiments of the disclosure are not limited to the above-mentioned embodiments, and various modifications are possible. Thus, embodiments obtained by combining technical means modified appropriately are included in the technical scope of the disclosure.

Industrial Applicability

The embodiments of the disclosure can be preferably applied to an image decoding device to decode coded data where graphics data is coded, and an image coding device to generate coded data where graphics data is coded. The embodiments of the disclosure can be preferably applied to a data structure of coded data generated by the image coding device and referred to by the image decoding device.

Reference Signs List

| | |
|---|---|
| 10 | CN Information decoding unit (Split information decoding unit) |
| 11 | Image coding device |
| 13 | TT Information decoding unit |
| 22 | TU decoding unit |
| 31 | Image decoding device |
| 32 | Context determination unit |
| 41 | Image display apparatus |

**Claims**

1. An image decoding device (31) for decoding a picture for each block, the image decoding device comprising:

   a context determination unit (32) configured to determine, based on a first comparison between a first height of a target block and a second height of a left neighboring block adjacent to a left side of the target block and a second comparison between a first width of the target block and a second width of an upper neighboring block adjacent to an upper side of the target block, a context of a split flag for indicating whether or not to split the target block, wherein determining the context includes determining a first split value by determining whether or not the first height is larger than the second height, determining a second split value by determining whether or not the first width is larger than the second width, and adding the first split value and the second split value together; and
   a split information decoding unit (10, 13) configured to decode the split flag of the target block by using the context determined by the context determination unit.

2. An image coding device (11) for coding a picture for each block, the image coding device comprising:

   a context determination unit (32) configured to determine, based on a first comparison between a first height of a target block and a second height of a left neighboring block adjacent to a left side of the target block and a second comparison between a first width of the target block and a second width of an upper neighboring block adjacent to an upper side of the target block, a context of a split flag for indicating whether or not to split the target block, wherein determining the context includes determining a first split value by determining whether or not the first height is larger than the second height, determining a second split value by determining whether or not the first width is larger than the second width, and adding the first split value and the second split value together; and
   a split information coding unit configured to code the split flag of the target block by using the context determined by the context determination unit.

**Patentansprüche**

1. Bilddecodierungsvorrichtung (31) zum Decodieren eines Bilds für jeden Block, wobei die Bilddecodierungsvorrichtung Folgendes umfasst:

   eine Kontextbestimmungseinheit (32), die so ausgestaltet ist, dass sie, basierend auf einem ersten Vergleich zwischen einer ersten Höhe eines Zielblocks und einer zweiten Höhe eines linken benachbarten Blocks, der an eine linke Seite des Zielblocks angrenzt, und einem zweiten Vergleich zwischen einer ersten Breite des Zielblocks und einer zweiten Breite eines oberen benachbarten Blocks, der an eine obere Seite des Zielblocks angrenzt, einen Kontext eines Teilungsflags zum Angeben, ob der Zielblock geteilt werden soll oder nicht, bestimmt, wobei das Bestimmen des Kontexts ein Bestimmen eines ersten Teilungswerts durch Bestimmen, ob die erste Höhe größer als die zweite Höhe ist oder nicht, ein Bestimmen eines zweiten Teilungswerts durch Bestimmen, ob die erste Breite größer ist als die zweite Breite oder nicht, und ein Zusammenaddieren des ersten Teilungswerts und des zweiten Teilungswerts umfasst; und
   eine Decodierungseinheit (10, 13) für Teilungsinformationen, die so ausgestaltet ist, dass sie das Teilungsflag des Zielblocks unter Verwendung des Kontexts, der von der Kontextbestimmungseinheit bestimmt wurde, decodiert.

**2.** Bildcodierungsvorrichtung (11) zum Codieren eines Bilds für jeden Block, wobei die Bildcodierungsvorrichtung Folgendes umfasst:

eine Kontextbestimmungseinheit (32), die so ausgestaltet ist, dass sie, basierend auf einem ersten Vergleich zwischen einer ersten Höhe eines Zielblocks und einer zweiten Höhe eines linken benachbarten Blocks, der an eine linke Seite des Zielblocks angrenzt, und einem zweiten Vergleich zwischen einer ersten Breite des Zielblocks und einer zweiten Breite eines oberen benachbarten Blocks, der an eine obere Seite des Zielblocks angrenzt, einen Kontext eines Teilungsflags zum Angeben, ob der Zielblock geteilt werden soll oder nicht, bestimmt, wobei das Bestimmen des Kontexts ein Bestimmen eines ersten Teilungswerts durch Bestimmen, ob die erste Höhe größer als die zweite Höhe ist oder nicht, ein Bestimmen eines zweiten Teilungswerts durch Bestimmen, ob die erste Breite größer ist als die zweite Breite oder nicht, und ein Zusammenaddieren des ersten Teilungswerts und des zweiten Teilungswerts umfasst; und
eine Codierungseinheit für Teilungsinformationen, die so ausgestaltet ist, dass sie das Teilungsflag des Zielblocks unter Verwendung des Kontexts, der von der Kontextbestimmungseinheit bestimmt wurde, codiert.

**Revendications**

**1.** Dispositif de décodage d'image (31) pour le décodage d'une photo pour chaque bloc, le dispositif de décodage d'image comprenant :

- une unité de détermination de contexte (32) configurée pour déterminer, sur la base d'une première comparaison entre une première hauteur d'un bloc cible et une deuxième hauteur d'un bloc voisin de gauche adjacent à un côté gauche du bloc cible et d'une deuxième comparaison entre une première largeur du bloc cible et une deuxième largeur d'un bloc voisin supérieur adjacent à un côté supérieur du bloc cible, d'un contexte d'un drapeau de division permettant d'indiquer si le bloc cible doit être divisé ou non, la détermination du contexte incluant la détermination d'une première valeur de division en déterminant si la première hauteur est plus grande que la deuxième hauteur ou non, la détermination d'une deuxième valeur de division en déterminant si la première largeur est plus grande que la deuxième largeur ou non, et l'addition de la première valeur de division et de la deuxième valeur de division ; et
- une unité de décodage d'information de division (10, 13) configurée pour décoder le drapeau de division du bloc cible à l'aide du contexte déterminé par l'unité de détermination de contexte.

**2.** Dispositif de codage d'image (11) pour le codage d'une photo pour chaque bloc, le dispositif de codage d'image comprenant :

- une unité de détermination de contexte (32) configurée pour déterminer, sur la base d'une première comparaison entre une première hauteur d'un bloc cible et une deuxième hauteur d'un bloc voisin de gauche adjacent à un côté gauche du bloc cible et d'une deuxième comparaison entre une première largeur du bloc cible et une deuxième largeur d'un bloc voisin supérieur adjacent à un côté supérieur du bloc cible, d'un contexte d'un drapeau de division permettant d'indiquer si le bloc cible doit être divisé ou non, la détermination du contexte incluant la détermination d'une première valeur de division en déterminant si la première hauteur est plus grande que la deuxième hauteur ou non, la détermination d'une deuxième valeur de division en déterminant si la première largeur est plus grande que la deuxième largeur ou non, et l'addition de la première valeur de division et de la deuxième valeur de division ; et
- une unité de codage d'information de division configurée pour coder le drapeau de division du bloc cible à l'aide du contexte déterminé par l'unité de détermination de contexte.

# FIG. 1

EP 3 557 873 B1

FIG. 2A CODING VIDEO SEQUENCE

| VPS | SPS#0 | SPS#1 | PPS#0 | PPS#1 | SEI | PICT #0 | PICT #1 |

FIG. 2B CODING PICTURE

| SLICE 0 | SLICE 1 | - - - - - - - - - - - | SLICE NS-1 |

FIG. 2C CODING SLICE

| SLICE HEADER | SLICE DATA |

FIG. 2D CODING SLICE DATA

| CODING TREE UNIT (CTU ) | CTU | CTU | CTU | CTU | CTU | CTU | CTU | CTU |

FIG. 2E CODING TREE UNIT

CTU (0)

CN (10)  CN (11)  CN (12)  CN (13)

CU (10)  CN (110) CN (111) CN (112) CN (113)  CU (12)  CN (130) CN (131) CN (132) CN (133)

CU (110) CU (111) CU (112) CU (113)  CU (131) CU (132) CU (133)

CN (120) CN (121) CN (122) CN (123)

CU (120) CU (121) CU (122) CU (123)

CU (10)
CU (12)

FIG. 2F CODING UNIT

| CUH | PU#0 | PU#1 | PU#2 | PU#3 | TU#0 | TU#1 | TU#2 | TU#3 |

22

# FIG. 3A  FIG. 3B  FIG. 3C  FIG. 3D

2Nx2N

2NxN

2NxnU

2NxnD

# FIG. 3E  FIG. 3F  FIG. 3G  FIG. 3H

Nx2N

nLx2N

nRx2N

NxN

# FIG. 4A

currPic

TIME (POC)

0　　　　　1　　　　　2　　　　　3　　　　　4

# FIG. 4B

REFERENCE PICTURE LIST OF currPic (= B3)

refIdxL0

L0 LIST
RefPicListL0

| I0 | B2 | P1 | | |
|----|----|----|---|---|

L1 LIST
RefPicListL1

| B2 | P1 | I0 | | |
|----|----|----|---|---|

refIdxL1

EP 3 557 873 B1

FIG. 5

25

FIG. 6

FIG. 7

# FIG. 8A

CAMERA — PROD_A4

PROD_A

RECORDING MEDIUM — PROD_A5

CODING UNIT — PROD_A1

MODULATION UNIT — PROD_A2

TRANSMITTER — PROD_A3

INPUT TERMINAL — PROD_A6

IMAGE PROCESSING UNIT — PROD_A7

# FIG. 8B

PROD_B

DISPLAY — PROD_B4

RECEIVER — PROD_B1

DEMODULATION UNIT — PROD_B2

DECODING UNIT — PROD_B3

RECORDING MEDIUM — PROD_B5

OUTPUT TERMINAL — PROD_B6

# FIG. 9A

PROD_C3

CAMERA

PROD_C

PROD_C4

INPUT
TERMINAL

PROD_C1

CODING UNIT

PROD_C2

WRITING UNIT

PROD_M

RECORDING
MEDIUM

PROD_C5

RECEIVER

PROD_C6

IMAGE
PROCESSING
UNIT

# FIG. 9B

PROD_D

PROD_D3

DISPLAY

PROD_M

RECORDING
MEDIUM

PROD_D1

READING UNIT

PROD_D2

DECODING UNIT

PROD_D4

OUTPUT
TERMINAL

PROD_D5

TRANSMITTER

# FIG. 10

FIG. 11A  FIG. 11B  FIG. 11C

```
        ┌─────────────────┐
        │     START        │
        └─────────────────┘
                 │
   ┌─────────────────────────────────────┐
   │  OBTAIN SPLIT-RELATED INFORMATION OF │  S0
   │    TARGET CN AND NEIGHBORING CN      │
   └─────────────────────────────────────┘
                 │
   ┌─────────────────────────────────────┐
   │    DETERMINE PRESENCE OR ABSENCE OF  │  S1
   │       SPLIT OF NEIGHBORING CN        │
   └─────────────────────────────────────┘
                 │
   ┌─────────────────────────────────────┐
   │ DETERMINE CONTEXT IN ACCORDANCE WITH │  S2
   │            DETERMINATION             │
   └─────────────────────────────────────┘
                 │
   ┌─────────────────────────────────────┐
   │ DECODE SPLIT FLAG IN ACCORDANCE WITH │  S3
   │              CONTEXT                  │
   └─────────────────────────────────────┘
                 │
        ┌─────────────────┐
        │      END         │
        └─────────────────┘
```

# FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Algorithm Description of Joint Exploration Test Model 5. *JVET-E1001-v1, Joint Video Exploration Team (JVET) of ITU-T SG 16 WP 3 and ISO/IEC JTC 1/SC 29/WG 11,* 12 January 2017

- Report of the Q6/16 Rapp. *Group meeting and 4th meeting of the Joint Collaborative Team on Video Coding, JCT-VC, Daegu, KR,* 20 January 2011